# EUROPÄISCHE PATENTSCHRIFT

(11) **EP 2 249 028 B1**
(45) Veröffentlichungstag und Bekanntmachung des Hinweises auf die Patenterteilung: **10.12.2014**
(21) Anmeldenummer: 10151200.2
(22) Anmeldetag: 20.01.2010
(51) Int. Cl.: F03D 3/06, F03D 3/04, F03B 17/06

(54) **Strömungskraftanlage**
Fluid flow power plant
Installation pour la production d'électricité à partir d'un écoulement de fluide

(30) Priorität: 29.04.2009 DE 102009019413; 04.05.2009 CH 6962009
(43) Veröffentlichungstag der Anmeldung: 10.11.2010
(73) Patentinhaber: iQ Energy AG, 8604 Volketswil (CH)
(72) Erfinder: Giebel, Horst Walter, 8125, Zollikerberg (CH); Zuberbühler, Werner, 8305, Dietlikon (CH)
(74) Vertreter: Sticht, Andreas

(56) Entgegenhaltungen:
- WO-A1-03/091569
- WO-A1-2006/119648
- WO-A1-2007/141367
- WO-A2-2009/021485
- DE-A1- 2 451 751
- DE-A1- 19 957 141
- US-A1- 2006 263 198
- US-A1- 2007 077 145
- US-A1- 2007 269 305

## Beschreibung

Die vorliegende Erfindung betrifft eine Strömungskraftanlage zur Erzeugung von elektrischem Strom aus einer Strömung eines Strömungsmediums. Das Strömungsmedium kann dabei allgemein ein Fluid, d.h. ein gasförmiger Stoff wie z.B. Luft oder ein flüssiger Stoff wie Wasser sein.

Die Nutzung alternativer Energien zur Erzeugung von elektrischem Strom, so auch aus Windkraft oder Wasserkraft, gewinnt immer mehr an Bedeutung.

Die bekannteste Bauart von Windkraftwerken zur Erzeugung von elektrischer Energie funktioniert ähnlich dem Prinzip des Flugzeugpropellers, wobei eine horizontale Rotationsachse des Propellers mit einem Generator gekoppelt, in einem Gehäuse gelagert, und auf einem vertikalen Turm aufgebaut und befestigt ist.

Derartige Windkraftanlagen, umgangssprachlich Windräder genannt, weisen den Nachteil auf, dass sie bei höheren Windgeschwindigkeiten aus Stabilitäts- und Sicherheitsgründen, angehalten werden müssen. Somit muss gerade dann, wenn die Energieausbeute potentiell am grössten wäre, auf die Nutzung derartiger Windkraftanlagen verzichtet werden.

Zudem weisen derartige Propeller-Windkraftanlagen eine verhältnismässig hohe Lärmemission auf, so dass ein Betrieb in unmittelbarer Nähe von Siedlungen kaum möglich ist. Ausserdem gefährden solche Anlagen auch Tiere, insbesondere Vögel und Fledermäuse.

Andere Form der Windkraftanlage ist mit vertikaler Achse des Rotors vorgesehen, wie in z.B. WO 2006/119648 A1, DE 199 57 141 A1, WO 03/091569 A1 oder WO 2007/141367 A1 offenbart.

Die bekannteste und auch älteste Bauart von Wasserkraftwerken zur Erzeugung von elektrischer Energie sind große Wasserräder, wobei man differenziert zwischen oberschlächtigen, mittelschlächtigen und unterschlächtigen Wasserrädern, je nach Position der Wasserzuführung, bezogen auf die Rotationsachse des Wasserrades.

Demzufolge ist es eine Aufgabe der vorliegenden Erfindung, eine verbesserte Strömungskraftanlage bereitszustellen. Wird die Strömunganlage als Windkraftanlage verwendet, wäre es wünschenswert, dass diese auch bei hohen Windgeschwindikeiten einsetzbar ist, die Tierwelt möglichst wenig gefährdet und/oder im Betrieb eine möglichst geringe Lärmemission aufweist, so dass nach Möglichkeit ein Betrieb in der Nähe von oder in Siedlungen möglich ist. Bei einer Verwendung der Strömungskraftanlage als Wasserkraftanlage wäre es wünschenswert, bei niedrigem als auch bei hohem Wasserstand und/oder sowohl bei langsamer als auch bei hoher Fließgeschwindigkeit Strom erzeugen zu können. Auch hier ist es wünschenswert, eine Lärmemission gering zu halten sowie die Gefährung von Tieren und auch Menschen möglichst auszuschließen.

Diese Aufgabe wird gelöst durch eine Strömungskraftanlage zur Erzeugung von elektrischem Strom gemäss Anspruch 1. Die abhängigen Ansprüche definieren weitere Ausführungsbeispiele.

Erfindungsgemäß wird eine Strömungskraftanlage bereitgestellt, umfassend einen drehbar gelagerten Rotor, wobei ein Querschnitt des Rotors senkrecht zu einer Rotationsachse des Rotors ausgehend von der Rotationsachse mindestens eine auf einer Strömungsangriffsfläche des Rotors liegende Strömungsangriffslinie aufweist, wobei die mindestens eine Strömungsangriffslinie einen auf einem äußeren Rand des Querschnitts liegenden Endpunkt aufweist,
wobei Endpunkte von Querschnitten an verschiedenen Orten der Rotationsachse eine Peripherielinie bilden, die zumindest teilweise, zum überwiegenden Teil, d.h. mehr als 50 % der Länge der Peripherielinie, oder auch vollständig schräg zu der Rotationsachse um die Rotationsachse umlaufend, z.B. wendelartig verläuft, und einen mit dem drehbar gelagerten Rotor gekoppelten Generator.

Derartige Strömungskraftanlagen eignen sich insbesondere für kleine bis mittlere Leistungsbereiche, d.h. Leistungen im Bereich bis ca. 20 kW, können jedoch grundsätzlich auch für höhere Leistungen dimensioniert werden und eignen sich für den Einsatz als Wind-oder Wasserkraftanlage.

Die mindestens eine Strömungsangriffsfläche kann zwei oder mehr Strömungsangriffsflächen umfassen. Dementsprechend sind zwei oder mehr Strömungsangriffslinien mit entsprechenden weiteren Endpunkten im Querschnitt vorgesehen sein, wobei die Endpunkte dann jeweils zwei oder mehr Peripherielinien bilden, welche zumindest teilweise schräg zu der Rotationsachse verlaufen.

Die ein oder mehreren Peripherilinien können über einen Winkelbereich von mehr als 90°, z.B. 170°-190°, z.B. 180° um die Rotationsachse im Uhrzeigersinn oder im Gegenuhrzeigersinn umlaufen. Die ein oder mehreren Peripherielinien können dabei auf einen gedachten Zylindermantel liegen, wobei die Rotationsachse einer Symmetrieachse des entsprechenden Zylinders entspricht.

Der Querschnitt kann eine Form aufweisen, welche unabhängig von der Höhe ist und welche beispielsweise S-förmig oder hakenförmig sein kann. Der Rotor kann zweiflüglig oder mehrflüglig, beispielsweise dreiflüglig, mit entsprechend zwei oder mehreren, z.B. drei, Peripherielinien ausgestaltet sein.

Ein Winkel zwischen der Peripherielinie und einer zu der Rotationsachse parallelen Geraden kann als Drallwinkel bezeichnet werden. Bei einem Ausführungsbeispiel kann ein Teil der Peripherielinie einen positiven Drallwinkel und ein anderer Teil der Peripherielinie einen negativen Drallwinkel, entsprechen sowohl linksgängigen als auch rechtsgängigen Drall, aufweisen. Hierdurch kann ein Staudruck entstehen, welcher sich positiv auf das Drehmoment des Rotors auswirken kann. Bei einem anderen Ausführungsbeispiel weist die Peripherielinie nur einen positiven oder nur einen negativen Drallwinkel auf. Der Absolutwert des Drallwinkels kann konstant sein und kann zwischen 45° und 90°, z.B. zwischen 60° und 80°, z.B. zwischen 62° und 67° liegen.

Der Generator kann ein oder mehrere Hohlwellengeneratoren aufweisen. Der Generator kann als Drehstromgenerator oder als Gleichstromgenerator ausgestaltet sein.

Die Strömungskraftanlage kann ein Strömungsabdeckelement zum Schützen eines Teils des Rotors vor einer Strömung aufweisen. Bei einem Ausführungsbeispiel wird das Strömungsabdeckelement in Abhängigkeit von einem von einem Strömungsrichtungssensor gelieferten Signal in Position gebracht.

Eine hierfür nötige Steuerung und ein Antrieb für das Strömungsabdeckelement können beispielsweise in einer den Generator beherbergenden Generatorkapsel angeordnet sein.

Bei einem Ausführungsbeispiel sind auf den ein oder mehreren Strömungsangriffsflächen Strömungsablenkungsrippen in regelmäßigen oder unregelmäßigen Abständen angeordnet.

Bei einem Ausführungsbeispiel als Wasserkraftanlage können ein oder mehrere Schwimmkörper bereitgestellt sein, um den Rotor hinsichtlich der Wasseroberfläche in einer im Wesentlichen definierten Position zu halten. Der Rotor kann dabei, ggf. zusammen mit dem Generator, z.B. über die Schwimmkörper, starr oder beweglich an einem Gewässerufer verankert sein.

Die Erfindung wird nachfolgend anhand von Ausführungsbeispielen unter Bezugnahme auf die beigefügten Zeichnungen näher erläutert. Es zeigen :
Fig. 1 eine perspektivische Ansicht einer Windkraftanlage gemäss einem Ausführungsbeispiel der vorliegenden Erfindung.
Fig. 2 eine schematische Ansicht eines Rotors mit markierten Windangriffsflächen.
Fig. 3 einen horizontalen Querschnitt entlang einer Linie I - I aus Fig. 2.
Fig. 4 einen um 90° verdreht dargestellten Querschnitt entlang der Linie I - I aus Fig. 2.
Fig. 5 eine Darstellung beider peripheren Drallkurven bzw. Peripherielinien eines Rotors.
Fig. 6 Querschnitte entlang der Linie I - I und dazu paralleler Schnittebenen A bis G bezüglich des Ausführungsbeispiels von Fig. 2 und Fig. 5.
Fig. 7 eine mögliche Anordnung von Windangriffsflächen zur Erzeugung einer Drehrichtung im Gegenuhrzeigersinn.
Fig. 8 eine mögliche Anordnung von Windangriffsflächen zur Erzeugung einer Drehrichtung im Uhrzeigersinn.
Fig. 9 - 11 verschiedene nicht beanspruchte mögliche Anordnungen von Querschnitten von Windangriffsflächen.
Fig. 12 die Anordnung von Querschnitten von Windangriffsflächen gemäß Anspruch 1.
Fig. 13 eine Darstellung ähnlich der Darstellung von Fig. 5 mit Windablenkungsrippen für ein anderes Ausführungsbeispiel der vorliegenden Erfindung.
Fig. 14 eine Darstellung ähnlich der Darstellung von Fig. 5 für ein anderes Ausführungsbeispiel der vorliegenden Erfindung.
Fig. 15 eine Ansicht auf einen Windkraftrotor mit einem Strömungs-Abdeckelement gemäss einem weiteren Ausführungsbeispiel der vorliegenden Erfindung.
Fig. 16 eine Draufsicht von Fig. 15 auf den Windkraftrotor mit Strömungs-Abdeckelement.
Fig. 17 ein Ausführungsbeispiel für einen Hohlwellengenerator bei einem Ausführungsbeispiel der vorliegenden Erfindung.
Fig. 18, 19 Ausführungsbeispiele von Anwendungen von horizontal liegenden Windkraftanlagen mit integrierten Generatoren, insbesondere zum Einbau in Fahrzeugen, vorwiegend mit Elektroantrieben.
Fig. 20 eine Wasserkraftanlage gemäß einem Ausführungsbeispiel der vorliegenden Erfindung, wobei Fig. 20a eine Frontansicht, Fig. 20b eine Seitenansicht und Fig. 20c eine Draufsicht darstellt.

Im Folgenden werden Ausführungsbeispiele der vorliegenden Erfindung näher erläutert. Diese Ausführungsbeispiele sind nicht als den Bereich der Erfindung einschränkend auszulegen. Insbesondere impliziert die Beschreibung eines Ausführungsbeispiels mit einer Vielzahl von Merkmalen nicht, dass alle diese Merkmale wesentlich für die Ausführung der Erfindung sind. Zudem ist zu bemerken, dass Merkmale verschiedener Ausführungsbeispiele kombiniert werden können, sofern dies nicht anders angegeben ist.

Im Folgenden werden zunächst Ausführungsbeispiele einer erfindungsgemäßen Windkraftanlage dargestellt.

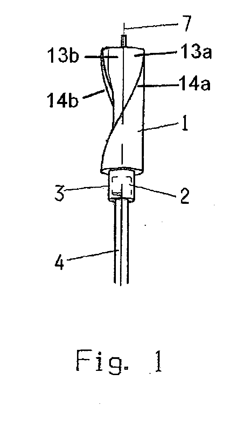

In Fig. 1 ist eine Windkraftanlage gemäss einem Ausführungsbeispiel der vorliegenden Erfindung schematisch dargestellt. Die Windkraftanlage des Ausführungsbeispiels von Fig. 1 umfasst einen um eine Rotationsachse 7 drehbar gelagerten Rotor 1 und einen mit dem Rotor 1 gekoppelten Generator 2 zur Umsetzung einer Drehbewegung des Rotor 1 in elektrischen Strom. Der Generator 2 ist in einer Generatorkapsel 3 angeordnet. Der Rotor 1 und der Generator 2 mit der Generatorkapsel 3 sind auf einer Stütze oder einem Mast 4 angeordnet. Eine Lagerung (nicht dargestellt) ermöglicht die Rotation des Rotors 1 um die Rotationsachse 7 relativ zum (starren) Mast 4. Bei dem Ausführungsbeispiel der Fig. 1 weist der Rotor 1 zwei Windangriffsflächen 13a, 13b auf, welche ausgehend von einem nahe der Rotationsachse 7 oder auf der Rotationsachse 7 gelegenen Punkt sich zu einer Außenseite des Rotors erstrecken und auf der Außenseite des Rotors von Peripherielinien 14a, 14b begrenzt werden. Bei dem Ausführungsbeispiel der Fig. 1 laufen die Peripherielinien 14a, 14b und somit die Windangriffsflächen 13a, 13b ansteigend um die Rotationsachse 7 um. Dies wird später noch näher erläutert.

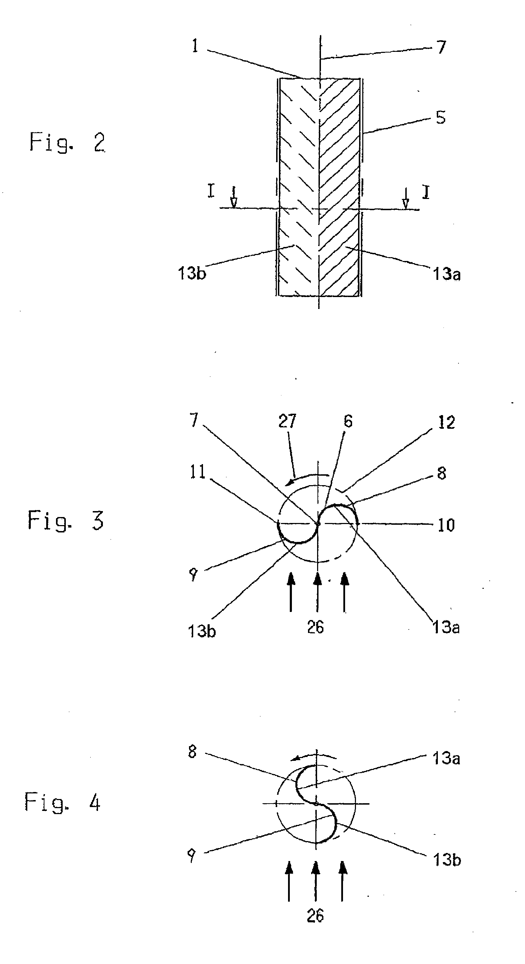

In Fig. 2 ist die geometrische Grundform des Rotors 1 gemäss einem Ausführungsbeispiel der vorliegenden Erfindung schematisch dargestellt. Bei der schematischen Darstellung von Fig. 2 ist der schräg ansteigende Verlauf der Peripherielinien 14a, 14b nicht berücksichtigt, um die Grundform besser zu veranschaulichen. Der geometrische Grundkörper des Rotors 1 ist ein gedachter stehender, rotationssymmetrischer Zylinder 5, dessen Rotationsachse durch die Rotationsachse 7 gebildet wird. Von den Windangriffsflächen 13a, 13b ist jeweils eine, wie dies später näher erläutert werden wird, dem Wind zugewandt und die andere ist dem Wind abgewandt.

In Fig. 3 ist ein Querschnitt entlang einer Linie I - I in Fig. 2 als Beispiel für einen möglichen Rotorquerschnitt dargestellt. Bei dem Ausführungsbeispiel der Fig. 3 ist der Rotorquerschnitt linienförmig entsprechend einer S-förmigen zur Rotationsachse 7 punktsymmetrischen Linie 6, wobei sich die Linie 6 aus zwei auf den Windangriffsflächen 13a bzw. 13b liegenden Windangriffslinien 8 bzw. 9 zusammensetzt. Ein äußerer Endpunkt 10 des Abschnitts 8 und ein äußerer Endpunkt 11 des Abschnitts 9 liegen auf einer gedachten Mantelfläche 12 des Zylinders 5 aus Fig. 2. Bei einer Windrichtung wie durch Pfeile 26 in Fig. 3 eingezeichnet dreht sich der so konstruierte Rotor im Gegenuhrzeigersinn wie durch einen Pfeil 27 angedeutet, da an der konkav dem Wind zugewandten Windangriffsfläche 13a (auch als aktive Windangriffsfläche zu bezeichnen) ein höherer Druck aufgebaut wird als auf der mit der konvexen Rückseite dem Wind zugewandten Windangriffsfläche 13b (passive Windangriffsfläche). Wie später dargestellt wird sind auch andere Formen von Windangriffslinien möglich. Bei dem dargestellten Ausführungsbeispiel weist der Rotorquerschnitt auf jeder Höhe der Rotationsachse die gleiche geometrische Form, im Falle von Fig. 3 die S-Form der Linie 6, auf. Die Endpunkte 10 bzw. 11 auf verschiedenen Höhen des Rotors ergeben die Peripherielinien 14a bzw. 14b.

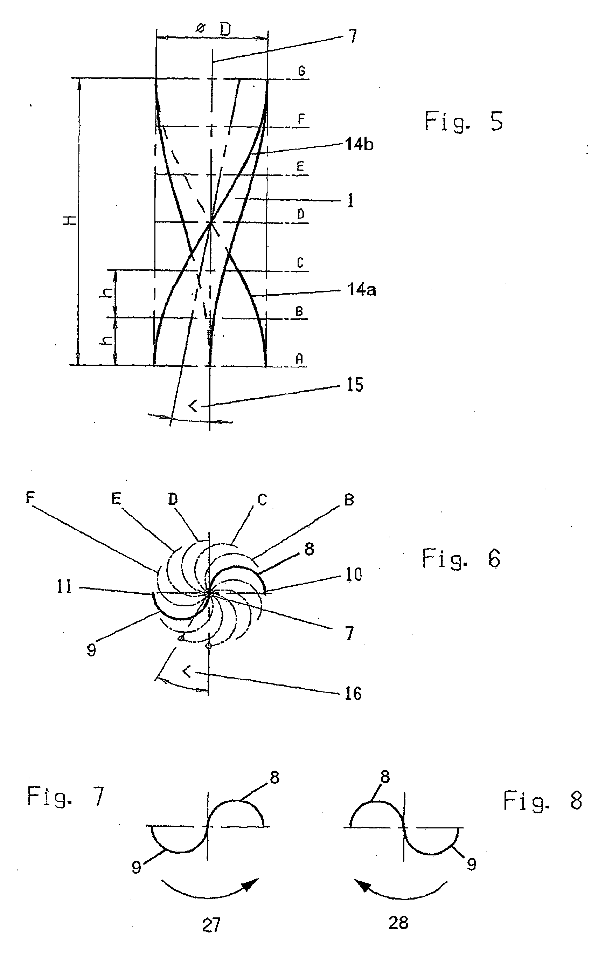

Betrachtet man die Windangriffsflächen 13a, 13b für einen einzigen Querschnitt, d.h. auf einer einzigen Zylinderhöhe, kann die Situation auftreten, dass sich bei einer Stellung zum Wind wie in Fig. 4 dargestellt kein resultierendes Drehmoment ergibt. Durch die schräg zur Rotationsachse verlaufenden Peripherielinien und die so sich um die Rotationsachse "herumwindenden" Peripherielinien und Windangriffsflächen wie in Fig. 1 dargestellt kann jedoch eine Situation wie in Fig. 4 dargestellt für den ganzen Rotor verhindert werden, d.h. über die gesamte Höhe des Rotors ergibt sich unabhängig von der Windrichtung bei dem dargestellten Ausführungsbeispiel ein resultierendes Drehmoment, welches den Rotor beispielsweise auch in Gang setzen kann. Diese Form der Peripherielinien wird nunmehr unter Bezugnahme auf Fig. 5 beispielhaft erläutert. Fig. 5 zeigt dabei schematisch eine Seitenansicht eines Rotors 1 wie beispielsweise des Rotors 1 aus der Fig. 1. D bezeichnet den Durchmesser des Rotors, und H die Höhe des Rotors. Zur Orientierung sind in Fig. 5 Höhenlinien A-G mit Abstand h aufgetragen. Zudem sind die Peripherielinie 14a, d.h. der Verlauf des Punktes 10 beispielsweise aus Fig. 3 über die Höhe, und die Peripherielinie 14b, d.h. der Verlauf des Punktes 11 über die Höhe, schematisch dargestellt. Wie bereits unter Bezugnahme auf Fig. 1 erläutert steigen die Peripherielinien 14a, 14b wendelartig um die Rotationsachse 7 umlaufend an. Ein Winkel zwischen der Peripherielinie und einer Parallelen zur Rotationsachse 7 durch einen Punkt der Peripherielinie wird als Drallwinkel 15 bezeichnet. Bei dem Ausführungsbeispiel der Fig. 5 ist der Drallwinkel konstant und liegt beispielsweise zwischen 45° und 90°, insbesondere zwischen 60° und 80°, beispielsweise zwischen 62° und 67°. Der sich in Fig. 5 scheinbar verändernde Drallwinkel ist eine Folge der Seitenansicht. Bei anderen Ausführungsbeispielen sind jedoch auch variable Drallwinkel möglich.

Um den Verlauf der Peripherielinien und der Windangriffsflächen weiter zu veranschaulichen, ist in Fig. 6 die Lage der Windangriffslinien 8, 9 für die verschiedenen Höhenlinien A-G in Draufsicht dargestellt. Der Winkelversatz zwischen den Windangriffslinien wird als Torsionswinkel 16 bezeichnet. Der Torsionswinkel für zwei Höhenlinien gleichen Abstandes ist dabei konstant, was dem oben erwähnten konstanten Drallwinkel entspricht.

Bei dem dargestellten Ausführungsbeispiel fällt die Kurve auf Höhe der Höhenlinie A mit der Kurve auf Höhe der Höhenlinie G zusammen, oder in anderen Worten die Peripherielinie überstreicht einen Winkelbereich von 180°. Bei anderen Ausführungsbeispielen sind auch andere Winkelbereiche, sowohl kleinere als auch größere Winkelbereiche, möglich. Bei dem dargestellen Ausführungsbeispiel ist die Gesamthöhe H dabei in sechs Teilhöhen h aufgeteilt, so dass in diesem Fall der Torsionswinkel 16 zwischen zwei aufeinander folgenden Höhenlinien 180°/6=30° beträgt.

Es ist jedoch zu betonen, dass die Höhenlinien aus Fig. 5 und die entsprechenden Querschnittsansichten aus Fig. 6 nur zur Erläuterung dienen und keine real in dem Rotor sichtbaren Linien sein müssen.

Wie bereits unter Bezugnahme auf Fig. 3 erläutert dreht sich bei der Konfiguration der Windangriffslinien 8, 9 von Fig. 6 der Rotor in Draufsicht im Gegenuhrzeigersinn, wie in Fig. 7 nochmals dargestellt. Durch "Spiegelung" der Windangriffslinien 8, 9 wie in Fig. 8 dargestellt kann eine Drehung im Gegenuhrzeigersinn erzeugt werden, wie durch einen Pfeil 28 angedeutet.

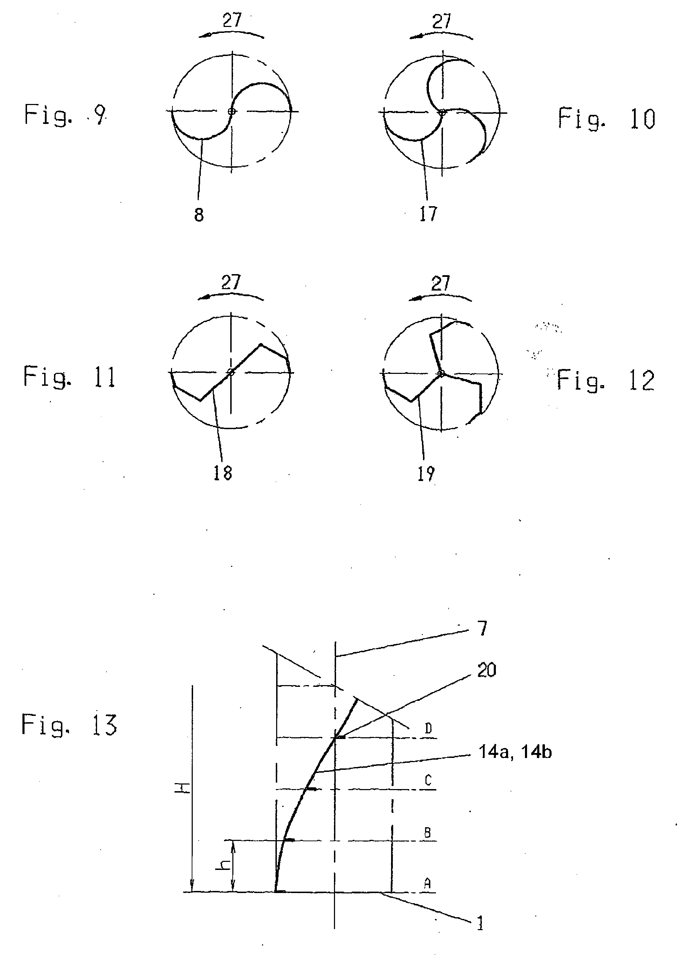

Die vorliegende Erfindung ist nicht auf Windangriffsflächen mit S-förmigen Querschnittsprofil wie unter Bezugnahme auf Fig. 3, 4, 6, 7 und 8 erläutert und in Fig. 9 zum Vergleich nochmals dargestellt beschränkt. Fig. 10-12 zeigen weitere Möglichkeiten für Querschnittsprofile, wobei die dargestellten Möglichkeiten nicht als abschließende Aufzählung anzusehen ist, sondern auch andere Querschnittsprofile möglich sind.

In Fig. 10 ist ein dreiflügliges Querschnittsprofil mit Windangriffslinien 17 dargestellt, welche insgesamt drei Windangriffsflächen bilden, die in einem Winkel von 120° zueinander stehen.

In Fig. 11 ist mit 18 bezeichnet eine näherungsweise hakenförmige Windangriffslinie zur Definition zweier Windangriffsflächen dargestellt. In Fig. 12 ist mit 19 eine dreiflüglige Variante der Windangriffsfläche aus Fig. 11 gezeigt. Für alle dargestellten Varianten können Peripherie- bzw. Dralllinien wie unter Bezugnahme auf Fig. 5 und 6 diskutiert realisiert werden.

Insbesondere aus Fig. 5 ist ersichtlich, dass wenigstens ein Teil der Windströmung z.B. durch die Windangriffsflächen 13a entlang der jeweiligen Windangriffsfläche, d.h. in Fig. 5 nach unten abgelenkt wird. Bei einem Ausführungsbeispiel, welches in Fig. 13 dargestellt ist, sind auf den Windangriffsflächen Rippen 20 vorgesehen, welche eine derartige Ablenkung verhindern oder zumindest reduzieren. Hierdurch kann ein erzeugtes Drehmoment erhöht werden. Die Rippen können wie in Fig. 13 dargestellt in gleichmäßigen Abständen über die gesamte Höhe der Windangriffsfläche angebracht sein. Bei anderen Ausführungsbeispielen können Rippen in ungleichmäßigen Abständen und/oder nur über einen Teil der Windangriffsfläche verteilt sein. Während in Fig. 13 die Rippen mit im Wesentlichen rechteckigen Querschnitt dargestellt sind, sind auch andere Querschnitte, beispielsweise mit abgerundeten Kanten, möglich.

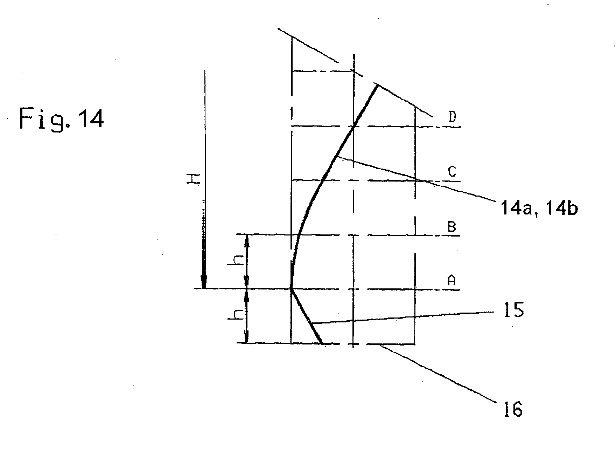

Wie bereits erwähnt ist der Verlauf der Peripherielinien 14a, 14b nicht auf die in Fig. 5 dargestellte Form beschränkt. Bei den in Fig. 5 dargestellten Verlauf sind die Peripherielinien 14a, 14b streng monoton, oder, in anderen Worten, der Drallwinkel 15 und somit auch die Steigung der Peripherielinien 14a, 14b haben für den gesamten Verlauf das gleiche Vorzeichen und sind bei dem dargestellten Beispiel konstant. Es sind jedoch auch andere Verläufe möglich. Ein Beispiel hierfür ist in Fig. 14 dargestellt.

Bei einer Peripherielinie 14a, 14b; 15 eines in Fig. 14 dargestellten Ausführungsbeispiels entspricht ein Abschnitt 14a, 14b beginnend bei einer Höhenlinie A im Wesentlichen der in Fig. 5 dargestellten Peripherielinie 14a, 14b und ist nicht vollständig dargestellt. Ein weiterer Abschnitt 15 der Peripherielinie unterhalb der Höhenlinie A, welche bei dem dargestellten Beispiel ebenfalls eine Höhe h aufweist, weist einen Drallwinkel auf, dessen Vorzeichen entgegengesetzt zu dem Drallwinkel der restlichen Peripherielinie ist. In anderen Worten weist bei der Vorstellung in Fig. 14 die Steigung des Abschnitts 15 das entgegengesetzte Vorzeichen der Steigung des Abschnitts 14a, 14b auf.

Bei einem derartigen Ausführungsbeispiel wird die Windströmung von der durch die Peripherielinie 14a, 14b begrenzte Windangriffsfläche abgelenkt, was zunächst zu einer geringen Drehmomentreduktion führen kann. Durch den Abschnitt der Windangriffsfläche, welche durch den Abschnitt 15 der Peripherielinie begrenzt wird, entsteht in der abgelenkten Windströmung ein Staudruck, welcher sich positiv auf das insgesamt erzeugte Drehmoment auswirkt.

Wie beispielsweise in der Ansicht von Fig. 3 zu sehen, werden in Abhängigkeit von einem momentanen Drehwinkel des Rotors stets beide Windangriffsflächen 13a, 13b vom Wind getroffen, wobei das resultierende Drehmoment hierbei insbesondere daraus ergibt, dass beispielsweise in Fig. 3 die Windangriffsfläche 13a dem Wind mit der konkaven Seite und die Windangriffsfläche 13b mit der konvexen Seite zugewandt ist. Ähnliche Situationen können bei mehr als zwei Windangriffsflächen auftreten.

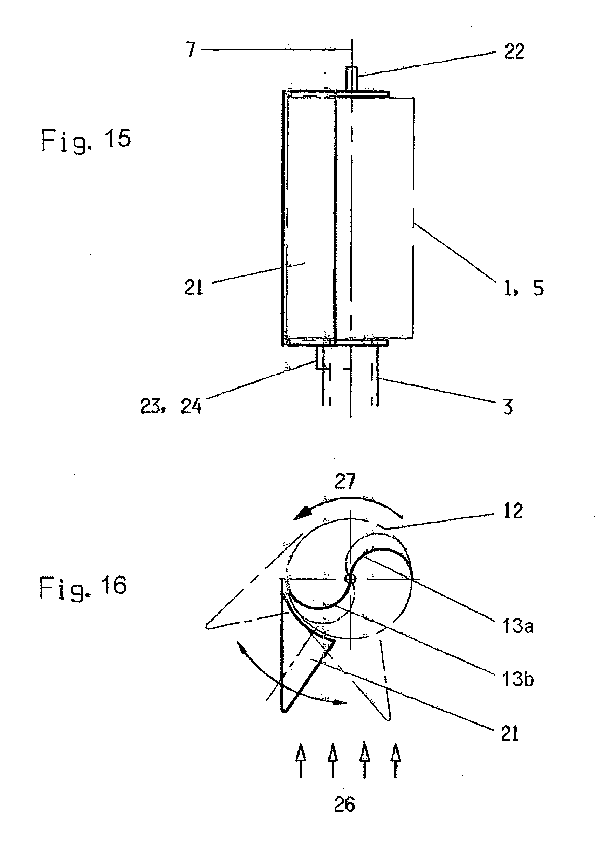

Zur Erhöhung des Drehmoments kann eine Seite des Rotors abgeschattet werden. Ein entsprechendes Ausführungsbeispiel ist in Fig. 15 und 16 dargestellt, wobei Fig. 15 eine Seitenansicht und Fig. 16 eine Draufsicht zeigt. Pfeile 26 geben wiederum die Windrichtung an.

Bei diesem Ausführungsbeispiel ist außerhalb des Rotors 1, d.h. außerhalb des bereits erwähnten gedachten Zylinders 5, wird ein beweglich gelagertes Strömungs-Abdeckelement 21 derart angebaut, dass es die gegen den Wind gerichtete konvexe Windangriffsfläche 13b abdeckt und die Windströmung auf die im Wind stehende konkave Windangriffsfläche 13a umlenkt. Bei sich ändernder Windrichtung wird bei dem dargestellten Ausführungsbeispiel die Position des Strömungs-Abdeckelementes 21 entlang der Zylinder-Peripherielinie 12 gesucht. Eine, durch einen Windrichtungs-Mess-Sensor 22 aktivierte Nachlauf-Steuerung 23 führt, beispielsweise mittels eines in der Generatorkapsel 3 eingebauten Servoantriebes 24, das Abdeckelement 21 rotativ in die gewünschte Position. Der Windrichtungs-Mess-Sensor 22 ist bevorzugt ausserhalb des Rotor-Windschattens am Windkraft-Aggregat angebracht. Bei dem dargestellten Ausführungsbeispiel schwenkt das Strömungsabdeckelement um die Rotationsachse 7. Es ist jedoch ebenso eine Lagerung auf Schienen möglich. Zudem muss der Windrichtungs-Mess-Sensor 22 nicht notwendigerweise an der Windkraftanlage direkt angebracht sein, sondern er kann auch entfernt positioniert sein und ein oder auch mehrere Windkraftanlagen ansteuern. Bei anderen Ausführungsbeispielen kann das Strömungs-Abdeckelement feststehend sein.

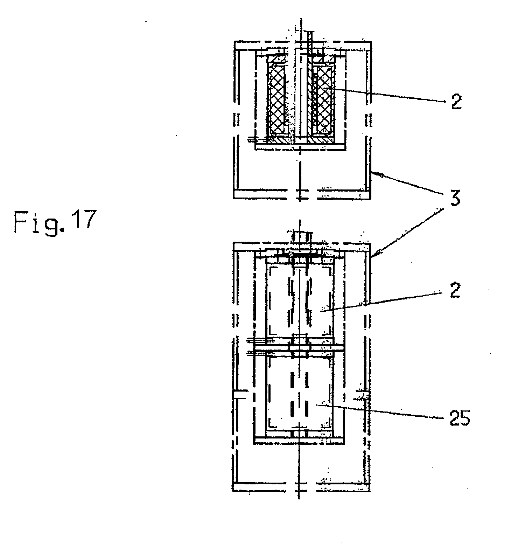

Bei einem Ausführungsbeispiel kann der Generator 2 als sogenannter Hohlwellengenerator konzipiert sein, wie dies bei Fig. 17 dargestellt ist. Der Hohlwellengenerator 25 aus Fig. 17 kann dabei einstöckig (Fig. 17 oben) oder zweistöckig (Fig. 17 unten) aufgebaut sein. Ein Hohlwellengenerator ist dabei ein Generator, welcher eine Hohlwelle aufweist, d.h. eine Welle, in deren Innenraum Elemente der Windkraftanlage angeordnet sind, beispielsweise eine Rotorwelle oder Lager- und Mitnehmer Elemente. Eine Bohrung, d.h. ein hohler Innenraum der Hohlwelle, kann mit Keilnuten, Vielkeil-Profilen, und/oder Kerb-Verzahnungen ausgeführt sein. Je nach Bedarf kann bei dem Ausführungsbeispiel der Fig. 17 mit einem Generator 2 Drehstrom, beispielsweise für die Einspeisung in ein Energienetz (Stromnetz), und/oder mit einem Generator 25 Gleichstrom, beispielsweise zum Aufladen von Energiespeichern wie Akkumulatoren, erzeugt werden.

Die Oberfläche des Rotors 1 kann aerodynamisch strukturiert sein, beispielsweise können Vertiefungen oder andere Texturen zur Verbesserung der Aerodynamik vorgesehen sein.

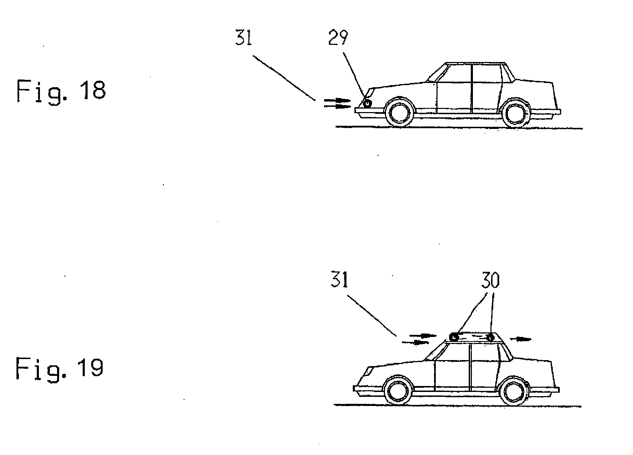

Erfindungsgemäße Windkraftwerke können stationär eingesetzt werden, beispielsweise auf Hausdächern, Balkonen, Gärten oder dergleichen aufgestellt werden. Es können jedoch auch mehrere Windkraftanlagen zusammengeschaltet werden, um die Stromausbeute zu erhöhen. Es können jedoch auch auf Fahrzeugen, wie z.B. Schiffen oder Kraftfahrzeugen, eingesetzt werden. In Fig. 18 und 19 ist eine erfindungsgemäße Windkraftanlage eingebaut in einen PKW zum Umwandeln von Fahrtwind und/oder Seitenwind in elektrischen Strom angebracht. Bei dem Ausführungsbeispiel der Fig. 18 ist eine Windkraftanlage 29, welche nach einem der vorstehenden Ausführungsbeispiele aufgebaut sein kann, nahe einer vorderen Stoßstange angebracht. In Fig. 19 sind Windkraftanlagen 30 auf einem Dach eines PKW angebracht. Pfeile 31 deuten die Richtung des Fahrtwindes an. Mit dem so erzeugten Strom kann beispielsweise eine Batterie des Fahrzeugs aufgeladen werden und so eine Reichweite insbesondere bei Elektrofahrzeugen vergrößert werden. Derartige Einsatzgebiete eignen sich insbesondere für Elektrofahrzeuge. Zu beachten ist, dass bei entsprechendem Wind eine derartige Windkraftanlage auch in ruhendem Zustand des Fahrzeugs die Batterie aufladen kann.

Der erfindungsgemäße Rotor kann aus einem Stück gefertigt sein, jedoch auch aus mehreren Teilstücken gefertigt sein. Als Materialien können insbesondere verwindungsfreie bzw. weitgehend verwindungsfreie und hinreichend stabile Leichtbaustoffe zum Einsatz kommen. Der erfindungsgemäße Rotor kann beispielsweise aus einem Kunststoff, beispielsweise mittels eines Spritzgussverfahrens, gefertigt werden.

Die Größe des Rotors und der anderen Komponenten können abhängig von der gewünschten Anwendung und den räumlichen Gegebenheiten innerhalb weiter Grenzen variabel gestaltet werden. Auch ist die Lage des Rotors variabel, beispielsweise ist sowohl ein aufrechter Aufbau, d.h. Rotationsachse im Wesentlichen senkrecht zur Erdoberfläche, als auch ein liegender Aufbau, d.h. Rotationsachse im Wesentlich parallel zur Erdoberfläche, denkbar. Dabei ist zu beachten, dass bevorzugt der Rotor derart angeordnet ist, dass der Windeinfall näherungsweise senkrecht zur Rotationsachse erfolgt, auch wenn auch bei einem schrägen Windeinfall eine Stromerzeugung möglich ist.

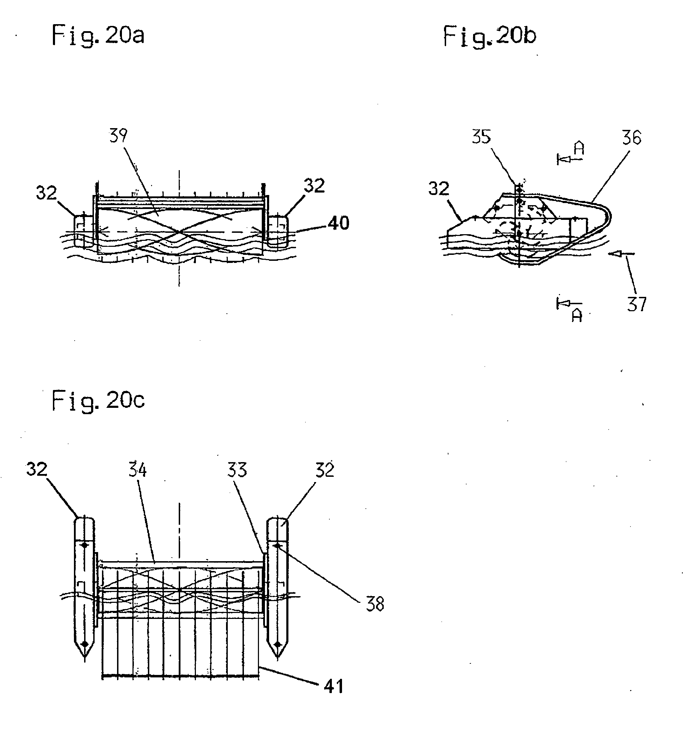

Unter Bezugnahme auf Fig. 1 wurden verschiedene Ausführungsbeispiele von Windkraftwerken erläutert. In Kraftwerke mit entsprechenden Rotoren wie oben stehend beschrieben lassen sich jedoch nicht nur mit Wind mit Strömungsmedium, sondern grundsätzlich mit jedem beliebigen Fluid, so auch flüssigen Strömungsmedien wie Wasser betreiben. Im Folgenden wird unter Bezugnahme auf Fig. 20 eine Wasserkraftanlage gemäß einem Ausführungsbeispiel der vorliegenden Erfindung erläutert, wobei Fig. 20a eine Frontansicht, Fig. 20b eine Seitenansicht und Fig. 20c eine Draufsicht auf eine derartige Wasserkraftanlage zeigt. Ein Rotor 39 der Wasserkraftanlage kann wie vorstehend für den Rotor 1 beschrieben aufgebaut sein. Insbesondere sind die unter Bezugnahme auf die Fig. 1-17 erläuterten Varianten und Abwandlungen des Rotors 1 auch auf dem Rotor 39 anwendbar, so dass diese Beschreibung nicht wiederholt wird.

Der Rotor 39 wird bei dem dargestellten Ausführungsbeispiel von zwei Schwimmkörpern 32 gehalten; 40 bezeichnet die Wasseroberfläche. Die Schwimmkörper halten bei dem dargestellten Ausführungsbeispiel den Rotor 39 derart, dass er etwa zur Hälfte, bevorzugt zu maximal 3/8 seines Rotordurchmessers in das Wasser eintaucht. Die Schwimmkörper 32 weisen Flutungsanschlüsse 38 auf, über welche die Schwimmkörper 32 z.B. teilweise mit Wasser befüllt werden können, um eine Höhe des Rotors 39 relativ zur Wasseroberfläche zu regulieren. 34 bezeichnet ein Transversalelement, welches über Lagerschilder 33 zum Lagern des Rotors 39, welche an den Schwimmkörpern 32 angebracht sind, die Schwimmkörper 32 miteinander koppelt, so dass die Wasserkraftanlage eine Einheit bildet. Ein Pfeil 37 deutet die Strömungsrichtung an. Zum Schutz des Rotors 39 kann ein Gitter 41 und 36 bereitgestellt sein, welches Unrat, Zweige, Geröll, Baumstämme und dergleichen vom Wasser, beispielsweise einem Fluss mitgeführtes Material vom Rotor 39 abhält.

Die Anzahl der Wasserangriffsflächen, der Drallwinkel und die Form des Rotors kann dabei an Gegebenheiten im Wasser angepasst werden. Beispielsweise können mehr Strömungsangriffsflächen, in diesem Fall Wasserangriffsflächen, vorgesehen sein als Windangriffsflächen bei einer vergleichbaren Windkraftanlage.

Bei dem Beispiel der Fig. 20 ist kein Strömungsabdeckelement erforderlich, da der Bereich des Rotors 39, welcher der Strömung ausgesetzt ist, durch die Schwimmkörper eingestellt werden kann. Bei anderen Ausführungsbeispielen kann ein Rotor vollständig ins Wasser eingetaucht sein, wobei dann ein entsprechendes Strömungsabdeckelement vorgesehen sein kann. Durch den Einsatz des erfindungsgemäßen Rotors können dabei Wasserkraftanlage insbesondere für kleine bis mittlere Leistungsbereiche mit geringem Platzbedarf geschaffen werden.

Das Ausführungsbeispiel der Fig. 20 weist zudem Laschen 35 auf, mit welchen die Wasserkraftanlage beispielsweise über Ketten, Seile oder Stangen am Ufer oder an anderen stationären Gegenständen wie beispielsweise im Wasser stehenden Pfeilern verankert werden kann.

Die obigen Ausführungsbeispiele dienen lediglich als Beispiele, und wie erläutert sind verschiedene Variationen möglich.

## Patentansprüche

1. Strömungskraftanlage, umfassend:
einen drehbar gelagerten Rotor (1; 39), wobei ein Querschnitt durch den Rotor (1; 39) senkrecht zu einer Rotationsachse (7) des Rotors ausgehend von der Rotationsachse (7) mindestens eine auf einer Strömungsangriffsfläche (13a, 13b) des Rotors (1; 39) liegende Strömungsangriffslinie (8, 9) aufweist, wobei ein in Endpunkt (10, 11) der Strömungsangriffslinie (8, 9) auf einem äußeren Rand (12) des Querschnitts liegt, wobei Endpunkte (10, 11) von Querschnitten an verschiedenen Orten der Rotationsachse (7) eine Peripherielinie (14a, 14b) bilden, welche zumindest teilweise schräg zu der Rotationsachse (7) und um die Rotationsachse (7) umlaufend verläuft, und
einen mit dem Rotor (1; 39) gekoppelten Generator zum Umwandeln einer Rotationsbewegung des Rotors (1; 39) in elektrischen Strom,
**dadurch gekennzeichnet,**
**dass** die Strömungsangriffslinie eine dreiflüglige Hakenform aufweist, wobei jeder Flügel der dreiflügligen Hakenform einen ersten Knick und einen zweiten Knick zwischen dem ersten Knick und einem äußeren Rand aufweist, wobei der zweite Knick in die gleiche Richtung geht wie der erste Knick.

2. Strömungskraftanlage nach Anspruch 1, wobei die Peripherielinie (14a, 14b) auf einem gedachten Zylindermantel verläuft.

3. Strömungskraftanlage nach Anspruch 1 oder 2, wobei die Strömungsangriffslinie (8, 9) des Querschnitts an jeder Stelle der Rotationsachse (7) die gleiche Form aufweist.

4. Strömungskraftanlage nach einem der Ansprüche 1-3, wobei die Peripherielinie (14a, 14b) eine konstante Steigung aufweist.

5. Strömungskraftanlage nach einem der Ansprüche 1-3,
wobei ein Abschnitt der Peripherielinie (14a, 14b) eine positive Steigung und ein weiterer Abschnitt (15) der Peripherielinie eine negative Steigung aufweist.

6. Strömungskraftanlage nach einem der Ansprüche 1-5,
wobei die Strömungsangriffsfläche (13a) senkrecht zu der Rotationsachse verlaufende Rippen (20) aufweist.

7. Strömüngskraftanlage nach einem der Ansprüche 1-6, wobei der Generator mindestens einen Hohlwellengenerator (19) umfasst.

8. Strömungskraftanlage nach einem der Ansprüche 1-7, weiter umfassend ein Strömungsabdeckelement (21), welches zum Abdecken eines Teils der drehbar gelagerten Rotors angeordnet ist.

9. Strömungskraftanlage nach Anspruch 8, weiter umfassend einen Strömungsrichtungssensor (22) und eine Steuerung, wobei die Steuerung ausgestaltet ist, ein Verfahren des Strömungsabdeckelements (21) in Abhängigkeit von einer von dem Strömungsrichtungssensor (22) erfassten Windrichtung zu steuern.

10. Strömungskraftanlage nach einem der Ansprüche 8 oder 9, wobei das Strömungsabdeckelement (21) keilförmig ist.

11. Strömungskraftanlage nach einem der Ansprüche 1-10, weiter umfassend mindestens ein Schwimmelement, wobei der Rotor (39) drehbar an dem mindestens einen Schwimmelement (32) angebracht ist.

12. Strömungskraftanlage nach Anspruch 11, wobei ein Auftrieb des mindestens einen Schwimmelements verstellbar ist.

13. Verwendung einer Strömungskraftanlage nach einem der Ansprüche 1-12 als Kraftanlage ausgewählt aus der Gruppe bestehend aus einer Windkraftanlage und einer Wasserkraftanlage.

14. Fahrzeug, umfassend eine Strömungskraftanlage nach einem der Ansprüche 1-10.

## Claims

1. A flow power arrangement, comprising:
a pivot-mounted rotor (1; 39), wherein a cross section through the rotor (1; 39) perpendicular to a rotational axis (7) of the rotor starting from the rotational axis (7) has at least one flow contact line (8, 9) situated on a flow contact area (13a, 13b) of the rotor (1; 39), wherein an end point (10, 11) of the flow contact line (8, 9) is situated at an outer edge (12) of the cross section, wherein end points (10, 11) of cross sections at different locations of the rotational axis (7) form a peripheral line (14a, 14b), which at least in part runs angular to the rotational axis (7) and around the rotational axis (7), and
a generator coupled with the rotor (1; 39) to convert a rotational motion of the rotor (1; 39) to an electric current,
**characterized in that**
the flow contact line has a three-winged hook form, wherein each wing of the three-wing hook form has a first bend and a second bend between the first bent and an outer edge, wherein the second bend goes in the same direction as the first bend.

2. The flow power arrangement of claim 1, wherein the parallel line (14a, 14b) runs on an imaginary cylinder barrel.

3. The flow power arrangement of claim 1 or 2, wherein the flow contact line (8, 9) of the cross section has a same form at each location of the rotational axis (7).

4. The flow power arrangement of any one of claims 1-3, wherein the peripheral line (14a, 14b) has a constant inclination.

5. The flow power arrangement of any one of claims 1-3, wherein one portion of the parallel line (14a, 14b) has a positive inclination and a further portion (15) of the peripheral line has a negative inclination.

6. The flow power arrangement of any one of claims 1-5, wherein the flow contact area (13a) has rips (20) running perpendicular to the rotational axis.

7. The flow power arrangement of any one of claims 1-6, wherein the generator comprises at least one hollow shaft generator (19).

8. The flow power arrangement of any one of claims 1-7, further comprising a flow covering element (21), which is arranged to cover a part of the pivot-mounted rotor.

9. The flow power arrangement of claim 8, further comprising a flow direction sensor (22) and a controller, wherein the controller is configured to control a displacement of the flow cover element (21) depending on a wind direction captured by the flow direction sensor (22).

10. The flow power arrangement of one of claim 8 or 9, wherein the flow covering element (21) has a wedge shape.

11. The flow power arrangement of any one of claims 1-10, further comprising at least one floating element, wherein the rotor (39) is rotatably mounted to the at least one floating element (32).

12. The flow power arrangement of claim 11, wherein a buoyancy of the at least one floating element is adjustable.

13. Use of a flow power arrangement of any one of claims 1-12 as power arrangement selected from the group consisting of a wind power arrangement and a water power arrangement.

14. Vehicle, comprising a flow power arrangement of any one of claims 1-10.

## Revendications

1. Installation génératrice d'électricité à partir d'un flux de fluide, comprenant :
un rotor (1 ; 39) monté de manière rotative, où une section transversale du rotor (1 ; 39) perpendiculairement à un axe de rotation (7) du rotor depuis l'axe de rotation (7) comporte au moins une ligne d'attaque du fluide (8, 9) située sur une surface d'attaque du fluide (13a, 13b) du rotor (1 ; 39), un point d'extrémité (10, 11) de la ligne d'attaque du fluide (8, 9) étant situé sur un bord extérieur (12) de la section transversales, des points d'extrémité (10, 11) de sections transversales à différents emplacements de l'axe de rotation (7) formant une ligne périphérique (14a, 14b), laquelle s'étend au moins partiellement obliquement à l'axe de rotation (7) et tout autour de l'axe de rotation (7), et
un générateur couplé au rotor (1 ; 39), pour la conversion d'un mouvement de rotation du rotor (1 ; 39) en courant électrique,
**caractérisé en ce que**
la ligne d'attaque du fluide présente une forme de crochet à trois branches, chaque branche de la forme de crochet à trois branches présentant un premier coude et un deuxième coude entre le premier coude et un bord extérieur, le deuxième coude étant orienté dans la même direction que le premier coude.

2. Installation génératrice d'électricité à partir d'un flux de fluide selon la revendication 1, où la ligne périphérique (14a, 14b) s'étend sur une surface de cylindre théorique.

3. Installation génératrice d'électricité à partir d'un flux de fluide selon la revendication 1 ou 2, où la ligne d'attaque du fluide (8, 9) de la section transversale présente la même forme à chaque emplacement de l'axe de rotation (7).

4. Installation génératrice d'électricité à partir d'un flux de fluide selon l'une des revendications 1 à 3, où la ligne périphérique (14a, 14b) présente une pente constante.

5. Installation génératrice d'électricité à partir d'un flux de fluide selon l'une des revendications 1 à 3,
où un segment de la ligne périphérique (14a, 14b) présente une pente positive et un autre segment (15) de la ligne périphérique présente une pente négative.

6. Installation génératrice d'électricité à partir d'un flux de fluide selon l'une des revendications 1 à 5,
où la surface d'attaque du fluide (13a) présente des nervures (20) perpendiculaires à l'axe de rotation.

7. Installation génératrice d'électricité à partir d'un flux de fluide selon l'une des revendications 1 à 6, où le générateur comprend au moins un générateur à arbre creux (19).

8. Installation génératrice d'électricité à partir d'un flux de fluide selon l'une des revendications 1 à 7, comprenant en outre un élément de couverture de flux (21), agencé pour la couverture d'une partie du rotor monté de manière rotative.

9. Installation génératrice d'électricité à partir d'un flux de fluide selon la revendication 8, comprenant en outre un détecteur de direction de flux (22) et une commande, la commande étant réalisée pour commander un déplacement de l'élément de couverture de flux (21) en fonction d'une direction de vent saisie par le détecteur de direction de flux (22).

10. Installation génératrice d'électricité à partir d'un flux de fluide selon la revendication 8 ou 9, où l'élément de couverture de flux (21) est en forme de coin.

11. Installation génératrice d'électricité à partir d'un flux de fluide selon l'une des revendications 1 à 10, comprenant en outre au moins un élément flottant, le rotor (39) étant monté de manière rotative sur l'élément ou les éléments flottants (32).

12. Installation génératrice d'électricité à partir d'un flux de fluide selon la revendication 11, où la flottabilité de l'élément ou des éléments flottants peut être réglée.

13. Utilisation d'une installation génératrice d'électricité à partir d'un flux de fluide selon l'une des revendications 1 à 12 comme centrale électrique sélectionnée dans le groupe composé d'une centrale éolienne et d'une centrale hydroélectrique.

14. Véhicule comprenant une installation génératrice d'électricité à partir d'un flux de fluide selon l'une des revendications 1 à 10.
